(19) Europäisches Patentamt
European Patent Office
Office européen des brevets

(11) **EP 3 767 460 A1**

(12) **EUROPÄISCHE PATENTANMELDUNG**

(43) Veröffentlichungstag:
**20.01.2021 Patentblatt 2021/03**

(51) Int Cl.:
***G06F 8/36*** (2018.01)    *G06F 8/33* (2018.01)

(21) Anmeldenummer: **19186748.0**

(22) Anmeldetag: **17.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schall, Daniel**
**2020 Hollabrunn (AT)**

(74) Vertreter: **Maier, Daniel Oliver**
**Siemens AG**
**Postfach 22 16 34**
**80506 München (DE)**

(54) **VERFAHREN ZUR ANSTEUERUNG EINES ELEKTRONISCHEN GERÄTS MIT EINEM OPTIMALEN PROGRAMMCODE, SOWIE SYSTEM, COMPUTERPROGRAMM UND SPEICHERMEDIUM HIERFÜR**

(57) Verfahren zur Ansteuerung eines elektronischen Geräts (2) mit einem optimalen Programmcode (1), welcher durch zumindest einen Funktionsparameter beschreibbar ist und über zumindest eine Schnittstelle mit einer Programmumgebung (10) interagiert, wobei zumindest zwei Kandidaten-Programmcodes ermittelt werden, indem mittels dem zumindest einen Funktionsparameter in einer Menge von Programmcodes (100) gesucht wird, und für jeden der zumindest zwei Kandidaten-Programmcodes zumindest ein Kompatibilitätsindikator bezüglich der zumindest einen Schnittstelle bestimmt wird, und der optimale Programmcode (1) aus den zumindest zwei Kandidaten-Programmcodes bestimmt wird, bei welchem der zumindest eine Kompatibilitätsindikator den optimaleren Wert aufweist.

FIG 1

**Beschreibung**

Die Erfindung betrifft ein Verfahren und ein System zur Ansteuerung eines elektronischen Geräts mit einem optimalen Programmcode.

Außerdem betrifft die Erfindung ein Computerprogramm und ein Speichermedium.

Bei der Entwicklung von Anwendungsprogrammen zur Ansteuerung von elektronischen Geräten wird häufig auf bereits bestehende Software-Bibliotheken, beispielsweise mit Geräte-Treibern, Codesequenzen für Datenerfassung, Datenanalyse und Datenauswertung in Matlab® beziehungsweise Simulink® oder statistische Auswertungs-Codesequenzen in der Programmiersprache R zurückgegriffen, um die Entwicklungs-zeit der Anwendungsprogramme kurz und entsprechend die Entwicklungskosten gering zu halten.

Derartige Bibliotheken können allgemeine Programmcodes enthalten, welche im Rahmen einer gemeinschaftlichen Entwicklung in einem Software-Ökosystem entstanden sind, wie beispielsweise Open-Source-Software oder auch bereits kompilierte Programmcodes, wobei ein Programmcode mehrere Codezeilen umfasst.

Ein Software-Ökosystem beschreibt das Zusammenspiel zwischen Organisationen und Unternehmen auf einem geteilten Markt für Softwareentwicklung und Services. Hierbei stehen die Beteiligten in ihren Netzwerken und den dadurch gebildeten sozialen oder wirtschaftlichen Ökosystemen mit ihrem Interesse an Software im Mittelpunkt. Oft bildet eine gemeinschaftliche, technologische Plattform (z. B. Siemens MindSphere) oder ein gemeinsamer Markt die Basis für geschäftliche Aktivitäten und eine Zusammenarbeit. Das Ökosystem ist durch den Austausch von Informationen, Ressourcen und Artefakten gekennzeichnet.

Solche Anwendungsprogramme beziehungsweise Programmcodes bezogen aus einem Software-Ökosystem können in unterschiedlichen Marktplätzen ("Appstores") von unterschiedlichen Herstellern angeboten werden.

Durch Verwendung von bereits bestehenden Treibern aus derartigen Bibliotheken bei der Entwicklung muss eine Programmiererin keine komplizierten und zumeist Hardware-nahen Detail-Kenntnisse über die Ansteuerung des Geräts besitzen. Somit kann eine Anwendungs-Programmierung auch durch weniger spezialisierte Personen erfolgen.

Bei der Anwendung von Open-Source-Software ist es jedoch häufig schwierig, unter den vielen verfügbaren Varianten und Versionen eine, auf die gegenwärtige Anwendung optimal abgestimmte Software zu finden, welche in eine bestehende Programmumgebung eingebettet werden kann, wobei die bestehenden Schnittstellen unterstützt werden.

Es ist Aufgabe der Erfindung ein elektronisches Gerät mit einem optimalen Programmcode anzusteuern, welcher optimal in eine bestehende Programmumgebung eingebettet werden kann.

Die Aufgabe wird durch ein Verfahren zur Ansteuerung eines elektronischen Geräts mit einem optimalen Programmcode gelöst, welcher durch zumindest einen Funktionsparameter beschreibbar ist und über zumindest eine Schnittstelle mit einer Programmumgebung interagiert, wobei zumindest zwei Kandidaten-Programmcodes ermittelt werden, indem mittels dem zumindest einen Funktionsparameter in einer Menge von Programmcodes gesucht wird, und für jeden der zumindest zwei Kandidaten-Programmcodes zumindest ein Kompatibilitätsindikator bezüglich der zumindest einen Schnittstellebestimmt wird, und der optimale Programmcode aus den zumindest zwei Kandidaten-Programmcodes bestimmt wird, bei welchem der zumindest eine Kompatibilitätsindikator den optimaleren Wert aufweist.

Unter einem optimaleren Indikator-Wert bezüglich zweier Kandidaten wird jener verstanden, welcher den besser geeigneten Programmcode anzeigt. Dies kann je nach Indikator-Typ ein niedriger oder höherer Wert sein.

Beispielsweise kann eine Schnittstellen-Kompatibilität hinsichtlich ihrer Übertragungseigenschaften mithilfe einer Übertragungszeit für ein Datenpaket fester Größe in Sekunden angegeben werden und der optimalere Wert ist eine niedrigere Übertragungszeit. Alternativ kann die Übertragung auch mithilfe einer Übertragungsrate in Megabytes pro Sekunde angegeben werden und der optimalere Wert ist eine höhere Übertragungsrate

Dadurch wird der optimale Programmcode ermittelt, welcher neben der abgebildeten Funktion auch eine optimale Kompatibilität einer Schnittstelle zur Programmumgebung bereitstellt. Dadurch kann eine nachfolgende Integrationstätigkeit in die Programmumgebung vereinfacht und eine Fehleranfälligkeit und die Systemstabilität verbessert beziehungsweise reduziert werden.

In einer Weiterbildung der Erfindung ist es vorgesehen, dass der jeweilige Kompatibilitätsindikator aus einem gewichteten Graphen mit zumindest zwei Knoten, welche die Programmumgebung und den jeweiligen Kandidaten-Programmcode repräsentieren, und zumindest einer Kante, welche die jeweilige zumindest eine Schnittstelle repräsentiert, und das Gewicht eine statische Abhängigkeit, eine dynamische Abhängigkeit, eine Protokoll-Interoperabilität oder eine konzeptuelle Interoperabilität oder eine Kombination daraus repräsentiert, ermittelt wird.

Dadurch wird der Kompatibilitätsindikator unter Verwendung eines gewichteten Graphen, welcher gerichtet oder ungerichtet sein kann, auf eine einfache und effiziente Weise ermittelt.

In einer Weiterbildung der Erfindung ist es vorgesehen, dass der jeweilige Kompatibilitätsindikator mittels Daten bestimmt wird, welche auf dem Prinzip des maschinellen Lernens ermittelt wurden.

Dadurch wird bereits bekanntes Wissen über die Kompatibilität von Programmcodes und Programmumgebungen auf eine einfache und effiziente Weise berücksichtigt.

In einer Weiterbildung der Erfindung ist es vorgesehen, dass der optimale Programmcode über zumindest zwei Schnittstellenmit der Programmumgebung interagiert und der zumindest eine Kompatibilitätsindikator für jede der zumindest zwei Schnittstellen bestimmt wird.

Dadurch kann eine höhere Komplexität bei der Ermittlung und Integration des optimalen Programmcodes in die Programmumgebung berüchtigt werden. Dies ist insbesondere in Kombination mit der Ermittlung des Kompatibilitätsindikators vor großem Vorteil. Eine nachfolgende Integrationstätigkeit in die Programmumgebung kann vereinfacht und die Systemstabilität verbessert werden.

In einer Weiterbildung der Erfindung ist es vorgesehen, dass der optimale Programmcode über zumindest zwei Schnittstellenmit der Programmumgebung interagiert und für die Gesamtheit der zumindest zwei Schnittstellen ein Gesamt-Kompatibilitätsindikator bestimmt wird, welcher bei der Bestimmung des optimalen Programmcodes berücksichtigt wird.

Dadurch kann eine noch höhere Komplexität bei der Ermittlung des optimalen Programmcodes in die Programmumgebung berüchtigt werden. Dies ist insbesondere in Kombination mit der Ermittlung des Kompatibilitätsindikators vor großem Vorteil. Eine nachfolgende Integrationstätigkeit in die Programmumgebung kann vereinfacht und die Systemstabilität verbessert werden.

Die erfindungsgemäße Aufgabe wird auch durch ein System zum Bereitstellen des optimalen Programmcodes für die Ansteuerung eines elektronischen Geräts gelöst, wobei das System eine Steuervorrichtung, eine Datenbank mit einer Menge von Programmcodes und eine Suchvorrichtung umfasst,
und das System dazu eingerichtet ist, das erfindungsgemäße Verfahren durchzuführen, wobei der optimale Programmcode aus Menge von Programmcodes von der Suchvorrichtung ermittelt und an die Steuervorrichtung übertragen wird, und das elektronische Gerät durch die Steuervorrichtung angesteuert wird.

Die erfindungsgemäße Aufgabe wird auch durch ein Computerprogramm gelöst, welches direkt in einen Speicher der Suchvorrichtung des erfindungsgemäßen Systems ladbar ist, mit Programmcodemitteln, um die Schritte des erfindungsgemäßen Verfahrens auszuführen, wenn das Computerprogramm in der Suchvorrichtung ausgeführt wird.

Die erfindungsgemäße Aufgabe wird auch durch ein Speichermedium mit darauf gespeicherten elektronisch lesbaren Steuerinformationen gelöst, welche zumindest ein erfindungsgemäßes Computerprogramm umfassen und derart ausgestaltet sind, dass sie bei Verwendung des Speichermediums in der Suchvorrichtung des erfindungsgemäßen Systems das erfindungsgemäße Verfahren durchführen.

Die Erfindung wird nachfolgend anhand eines in den beigeschlossenen Zeichnungen dargestellten Ausführungsbeispiels näher erläutert. In den Zeichnungen zeigt:

Fig. 1    ein Beispiel für ein erfindungsgemäßes System,

Fig. 2    ein Beispiel für ein Netzwerk für Programmcodes,

Fig. 3    ein Beispiel für drei Programmcodes, die untereinander in Beziehung stehen,

Fig. 4    ein Beispiel für einen Programmcodes, der den Programmcodes der Fig. 3 hinzugefügt werden soll,

Fig. 5    einen gewichteten Graphen für das Beispiel der Fig. 4,

Fig. 6    ein Beispiel für einen Pseudocode zur Bestimmung eines Gruppierungs-Koeffizienten,

Fig. 7    ein Beispiel für einen Pseudocode zum Finden eines optimalen Programmcodes.

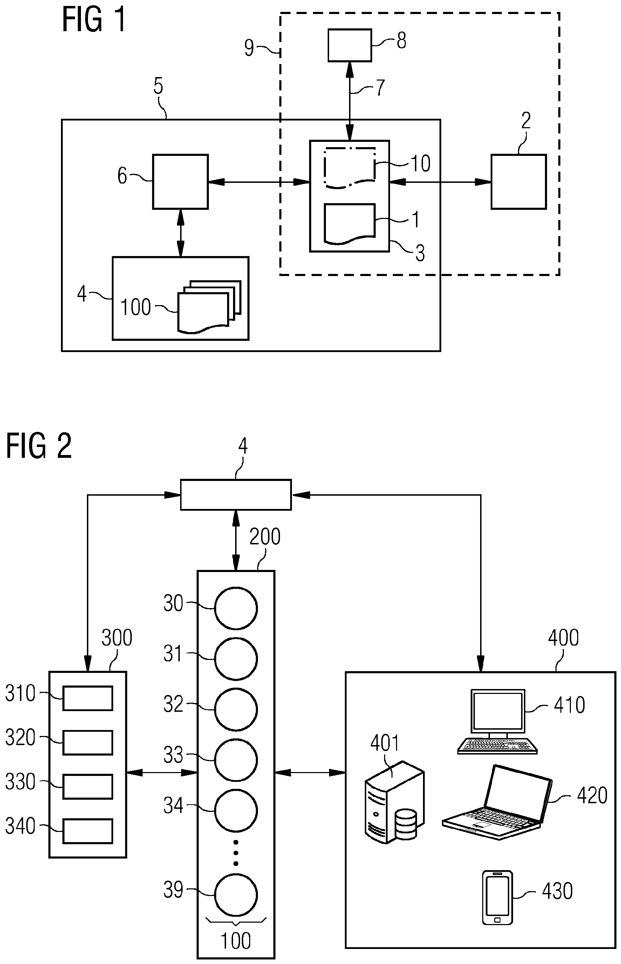

**Fig. 1** zeigt ein Beispiel für ein erfindungsgemäßes System 5 zum Ansteuern eines elektronischen Geräts 2 durch ein Steuervorrichtung 3 mit einem optimalen Programmcode 1.

Die Steuervorrichtung 3 führt den bereitgestellten optimalen Programmcode 1, beispielsweise ein Geräte-Treiber, aus. Die Steuervorrichtung 3 kann während der Ausführung weiterhin von einem Benutzer 8 Steuerbefehle oder Steuerdaten 7 zur Ansteuerung des elektronischen Geräts 2 mit Hilfe des Geräte-Treibers empfangen. Dabei können das elektronische Gerät 2 und die Steuervorrichtung 3 eine gemeinsame Funktioneinheit bilden und dabei verschiedene Steuerfunktionen ausführen. Die Steuerfunktionen des elektronischen Geräts 2 beziehungsweise der Steuervorrichtung 3 können sowohl zum Steuern, wie durch das Ansteuern eines Aktors, als auch zum Erfassen von Messgrößen vorgesehen sein und mit weiteren Geräten verbunden sein.

Geräte, insbesondere industriell genutzte Produktionsvorrichtungen im weitesten Sinne, und/oder deren Funktioneinheiten können auch miteinander vernetzt werden. Beispiele für Geräte sind einzelne Produktionsanlagen, ProduktionsMaschinen, Sensoren und Aktoren beziehungsweise Motoren. Hier ergibt sich die Systematik, dass eine Produktionsmaschine jeweils zumindest einen Sensor und/oder zumindest einen Aktor beziehungsweise Motor aufweisen kann. Eine Produktionsanlage wiederum kann eine oder mehrere Produktionsmaschinen aufweisen. Es können beispielsweise Geräte unterschiedlicher Hierarchieebenen miteinander vernetzt werden und auch kleinste Einheiten der Produktions-Anlagen, beispielsweise die Sensoren oder Aktoren beziehungsweise Motoren, als eigenständiger Teil mit dem Netzwerk verbunden werden. Dieses Prinzip wird auch als "Internet of Things", zu Deutsch "Internet der Dinge", bezeichnet. Im industriellen Maßstab wird dies auch als Industrie 4.0 bezeichnet, welche durch die feingliedrige und eigenständige Vernetzung der einzelnen Gerätschaften ein besonders hohes Maß an Produktivität und Flexibilität ermöglicht.

Zur Steuerung und/oder Wartung derartiger Geräte, können wiederum unterschiedliche Funktionseinheiten vorgesehen sein. Dabei können Steuerfunktionen durch mehrere gleichartige und/oder verschiedenartige Funktionseinheiten im Zusammenspiel erbracht werden. Der Begriff Steuerfunktionen ist im vorliegenden Kontext breit zu verstehen und beinhaltet alle denkbaren Funktionen zum Steuern, Überwachen, Warten und/oder zum Sammeln von Daten. Mit anderen Worten kann durch ein Zusammenspiel der Funktionseinheiten die Steuerung, Überwachung, Wartung und/oder das Sammeln von Daten der Gerätschaften bereitgestellt sein. Selbstverständlich sind die Funktionseinheiten hierzu ebenfalls mit der Gerätschaft und untereinander vernetzt. Die Funktionseinheiten können über Schnittstellen miteinander kommunizieren, um die Steuerfunktion bereitzustellen. Die Kommunikation über die Schnittstellen erfolgt durch den Austausch von Steuersignalen.

Das System 5 umfasst eine Suchvorrichtung 6 zum Auffinden des optimalen Programmcodes 1 aus einer Datenbank 4 des Systems 5, und eine Steuervorrichtung 3 zum Laden des gefundenen optimalen Programmcodes 1 aus der Datenbank 4, welche eine Menge von Programmcodes umfasst, und zum Ausführen des optimalen Programmcodes 1. Die Datenbank 4 kann beispielsweise einen App-Store umfassen, der über das Internet verbunden ist.

Die Steuervorrichtung 3 ist ferner dazu eingerichtet, das erfindungsgemäße Verfahren auszuführen, vorzugsweise mittels Steuerdaten 7, welche beispielsweise von einem Benutzer 8 oder auch einem Anwendungs-Programmcode bereitgestellt werden, und wodurch das elektronische Gerät 2 angesteuert wird. Die Steuerdaten 7 können auch Parameter des elektronischen Geräts 2 an den Benutzer 8 oder den Anwendungs-Programmcode übermittelt werden.

Das erfindungsgemäße Verfahren wird weiter unter näher erläutert.

Sobald der optimale Programmcode der Steuervorrichtung 3 bereitgestellt ist und dort gespeichert ist, kann eine Trennung des Systems 5 erfolgen, das heißt ein alleiniger Betrieb der Steuervorrichtung 3 mit dem elektronischen Gerät 2 innerhalb eines neu gebildeten Anwendungssystems 9 erfolgen.

Das Anwendungssystem 9 umfasst somit die Steuervorrichtung 3 und das elektronische Gerät 2, sowie einen Anwendungs-code, in welchen der zuvor ermittelte optimale Programm-code eingebettet sein kann. Es kann weiterhin eine Interaktion des optimalen Programmcodes mit dem Benutzer 8 beispielsweise in Form des Anwendungs-Programmcodes durch Steuerdaten 7 erfolgen.

Alternativ kann der bereitgestellte optimale Programmcode in einen Anwendungs-Programmcode eingebettet werden und nicht auf der vorher beschriebenen Steuervorrichtung 3 ausgeführt werden. Diese Variante ist in den Figuren nicht dargestellt. Eine entsprechende Anwendungs-Steuervorrichtung kann konfiguriert werden, um den Anwendungs-Programmcode mit dem eingebetteten optimalen Programmcode auszuführen. Ist dabei der optimale Programmcode ein Geräte-Treiber, so sollte die Anwendungs-Steuervorrichtung einen entsprechenden internen Aufbau der Treiber-Elektronik aufweisen, um den Geräte-Treiber-Programmcode anwenden zu können.

**Fig. 2** zeigt ein Beispiel für eine "virtuelle" Datenbank 4, welche durch ein Netzwerk für Programmcodes gebildet ist. Mehrere Programmcodes 30-39, das heißt "Apps", bilden eine Menge 100 von Programmcodes, welche Kandidaten für den gesuchten optimalen Programmcode sein können.

Ferner weist das Netzwerk 4 Verknüpfungen zu Datenquellen 300 auf, welche beispielsweise Schnittstellen zur Anwendungs-Entwicklern 310, BLOGs 320, Anwendungs-Kritiken/Reviews 330 oder soziale Netzwerke 340 sein können.

Außerdem weist das Netzwerk 4 Verknüpfungen zu Plattformen von Endgeräten von Benutzern 400 auf, beispielsweise Proxy-Server 401, Personal Computer 410, Laptops/Tablets 420 oder Smartphones 430.

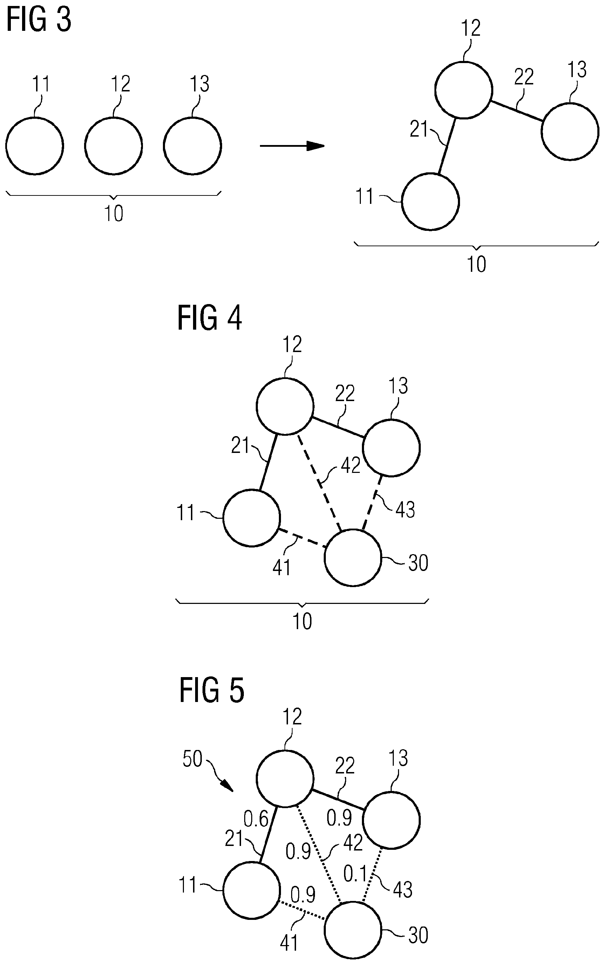

**Fig. 3** zeigt ein Beispiel für drei Programmcodes 11-13, die untereinander über Abhängigkeiten 21 und 22 in Beziehung stehen und durch einen ungerichteten Graphen dargestellt werden und eine Programmumgebung 10 bilden.

Die Programmumgebung 10 kann beispielsweise eine Rechner-Plattform auf einem Edge-Gerät oder Teil einer Cloud sein.

Die Programmcodes 11-13 können verschiedene Anwendungen oder Systemkomponenten sein, welche mittels Schnittstellen miteinander interagieren.

Die Schnittstellen sind zusätzlich mit einem Gewicht versehen, welches eine statische Abhängigkeit, eine dynamische Abhängigkeit, eine Protokoll-Interoperabilität oder eine konzeptuelle Interoperabilität oder eine Kombination daraus repräsentiert.

Eine statische Abhängigkeit kann eine Schnittstelle sein, welche ein Programmcode explizit zur Übergabe von Parametern über den Aufruf bereitstellt.

Eine dynamische Abhängigkeit kann eine Schnittstelle zwischen zwei Programmcodes sein, welche untereinander Daten austauschen. Dies kann direkt oder mittels einem Zwischenmedium, wie einem "Message Broker" erfolgen, welches zusätzlich auch eine Protokoll-Konversion durchführen kann.

Eine Protokoll-Interoperabilität besteht dann, wenn zwei Programmcodes über das gleiche Kommunikations-Protokoll untereinander kommunizieren.

Eine konzeptuelle Interoperabilität liegt vor, wenn sich zwei Programmcodes dieselbe Domänen-Konzept teilen. Dies kann beispielsweise aus einer API-Dokumentation (Programmierschnittstelle, englisch "application programming interface") entnommen werden.

In den meisten Fällen bestehen Beziehungen zwischen den Programmcodes, da Daten ausgetauscht und/oder Funktionen von Programmcodes zusammengestellt werden müssen.

Es besteht klarerweise der Wunsch für einen Benutzer, dass sich ein neu gekaufter Programmcodes nahtlos in die vorhandenen Programmumgebung einfügt. Dazu kann ein Integrationsaufwand nötig sein.

**Fig. 4** zeigt ein Beispiel für einen Kandidaten-Programmcode 30, der den Programmcodes 11-13, das heißt der Programmumgebung 10 hinzugefügt werden soll.

Zusätzlich zu den Knoten und Kanten der Fig. 3 werden neue Abhängigkeiten 41-43 in den Graphen eingefügt, welche die Schnittstellen zwischen dem Programmcode 30 und der Programmumgebung 10 darstellen.

Dabei wird für jede neue Abhängigkeit 41-43 anhand von Abhängigkeits- und Interoperabilitäts-Informationen der Programmcodes 11-13, 30 vorher getestet, ob diese tatsächlich vorliegt.

Die Abhängigkeits- und Interoperabilitäts-Informationen können von einer Diagnose-Datenbank erfasst sein, welche Informationen hinsichtlich bekannter Fehler ("error logs") und/oder Programmablaufverfolgung beinhaltet. Dabei kann beispielsweise auf dokumentierte Informationen hinsichtlich Programmabstürzen, Kommunikationsfehler, vorübergehende Stabilitätsprobleme, Laufzeit-/ Performance-Daten des Systems wie MTBF ("Mean Time Between Failure"), etc. zurückgegriffen werden. Diese Informationen können global, im Unternehmen oder im persönlichen Umfeld gesammelt werden.

In jedem Fall verfügt die Diagnose-Datenbank über Informationen über die Verlässlichkeit des Systems und der Programmcodes.

Informationen, die keine Abhängigkeit und/oder Kommunikation zwischen Programmcodes beschreiben, können mittels Klassifizierungs-Algorithmen statistisch ermittelt und herausgefiltert werden.

Beispielsweise kann eine Information in der Diagnose-Datenbank erhalten bleiben, welche angibt, dass ein Programmcode A immer abstürzt, wenn dieser eine Nachricht von einem Programmcode B erhält.

Mit anderen Worten wird das elektronische Geräts 2 mit dem optimalen Programmcode 1 angesteuert, welcher durch zumindest einen Funktionsparameter beschreibbar ist und über die drei Schnittstellen 41-43 mit der Programmumgebung 10 interagiert. Mehrere Kandidaten-Programmcodes 30-39 werden ermittelt, indem mittels dem zumindest einen Funktionsparameter in einer Menge von Programmcodes 100 gesucht wird.

Außerdem wird für jeden der Kandidaten-Programmcodes 30-39 zumindest ein Kompatibilitätsindikator bezüglich der drei Schnittstellen 41-43 bestimmt.

Der optimale Programmcode 1 wird aus den Kandidaten-Programmcodes 30-39 bestimmt, bei welchem der zumindest eine Kompatibilitätsindikator den optimaleren Wert aufweist. In diesem Fall stellt ein größeres Kanten-Gewicht einen optimaleren Wert dar.

Der jeweilige Kompatibilitätsindikator wird aus einem gewichteten Graphen 50 mit drei Knoten, welche die Programmumgebung 10 und den jeweiligen Kandidaten-Programmcode 30-39 repräsentieren, und zumindest einer Kante, welche die jeweilige Schnittstelle 41-43 repräsentiert, ermittelt.

Das Gewicht kann dabei eine statische Abhängigkeit, eine dynamische Abhängigkeit, eine Protokoll-Interoperabilität oder eine konzeptuelle Interoperabilität oder eine Kombination daraus, repräsentieren.

Der jeweilige Kompatibilitätsindikator wird mittels Daten bestimmt, welche auf dem Prinzip des maschinellen Lernens ermittelt wurden.

Der optimale Programmcode 1 interagiert über die drei Schnittstellen 41-43 mit der Programmumgebung 10 und der zumindest eine Kompatibilitätsindikator wird für jede der drei Schnittstellen 41-43 bestimmt.

Für die Gesamtheit der drei Schnittstellen 41-43 wird ein Gesamt-Kompatibilitätsindikator bestimmt, welcher bei der Bestimmung des optimalen Programmcodes 1 berücksichtigt wird. **Fig. 5** zeigt einen ungerichteten gewichteten Graphen 50 für das Beispiel der Fig. 4.

Die Gewichte werden bei der Bestimmung des Kompatibilitätsindikators verwendet.

Ein Gewicht einer Kante zwischen zwei Knoten $u$ und $v$ kann bestimmt werden durch:

$$w_{uv} = \left. SC(u \leftrightarrow v) \middle/ \sum_{x \text{ benachbart zu } (G,u)} SC(u \leftrightarrow v) \right.$$

Die Funktion **SC** ruft die Anzahl von erfolgreichen Kommunikationen zwischen den zwei Knoten $u$ und $v$ von der Diagnose-Datenbank ab.

Im Fall eines ungerichteten Graphen, wie in diesem Beispiel, kann eine Kommunikation entweder durch den Knoten *u* oder *v* eingeleitet werden. Dementsprechend kann dies für einen gerichteten Graphen angewandt werden, wobei die Funktion $SC(u \rightarrow v)$ von der Diagnose-Datenbank die Anzahl von erfolgreichen Kommunikationen abruft, welche durch den Knoten *v* in Richtung zum Knoten *u* initiiert wurden.

Es wird eine Menge an Metriken berechnet, welche auswertet, wie gut ein neuer Programmcode in die Programmumgebung passt.

Eine sehr einfache Metrik ist der Grad eines Knotens, das heißt wie viele Kanten sind mit einem Knoten verbunden. Der Programmcode 30 der Fig. 5 weist einen Grad von drei auf, da sich der Programmcode 30 auf die Programmcodes 11-13 bezieht.

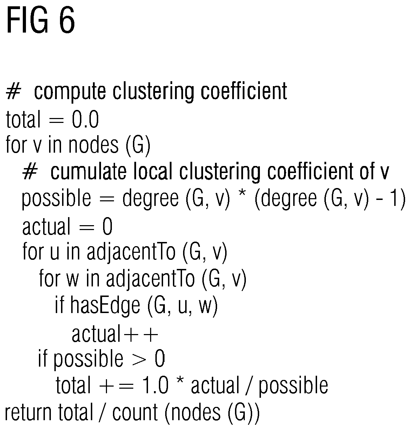

**Fig. 6** zeigt ein Beispiel für einen Pseudocode zur Bestimmung eines Gruppierungs-Koeffizienten.

Zusätzliche Metriken zur Abschätzung der Qualität eines neuen Graphen können einen Gruppierungs-Koeffizienten bestimmen, welcher den Grad bestimmt, zu welchem Knoten in einem Graphen zu einer gemeinsamen Gruppierung neigen.

Der Gruppierungs-Koeffizient kann bei der Bestimmung des Kompatibilitätsindikators verwendet werden.

Je mehr ein Graph verbunden ist, desto höher ist der Gruppierungs-Koeffizient. Ein vollständig verbundener Graph wird als "Clique" bezeichnet.

In diesem Beispiel ist es umso besser, je höher der Gruppierungs-Koeffizient ist, wobei vorzeichenbehaftete Graphen meist ausgenommen sind.

In diesem Beispiel beträgt der der Gruppierungs-Koeffizient 5/6.

Weitere Metriken (in den Figuren nicht dargestellt) sind beispielsweise Zentralitäts-Metriken, wie die Zwischen-Zentralität (englisch "betweenness centrality"), welche die relative Wichtigkeit von Knoten bezeichnet.

Eine Zwischen-Zentralität bestimmt die Zentralität eines Graphen anhand der kürzesten Pfade. Für jedes Knoten-Paar in einem verbundenen Graphen existiert zumindest ein kürzester Pfad zwischen zwei Knoten, bei welchem entweder die Anzahl der Kanten, entlang welchen der Pfad (bei ungewichteten Graphen) verläuft oder die Summe der Gewichte der Kanten (bei gewichteten Graphen minimal ist. Die Zwischen-Zentralität für jeden Knoten ist die Anzahl kürzester Pfade, die durch den Knoten verlaufen.

Zentralitäts-Metriken können bei der Bestimmung des Kompatibilitätsindikators verwendet werden.

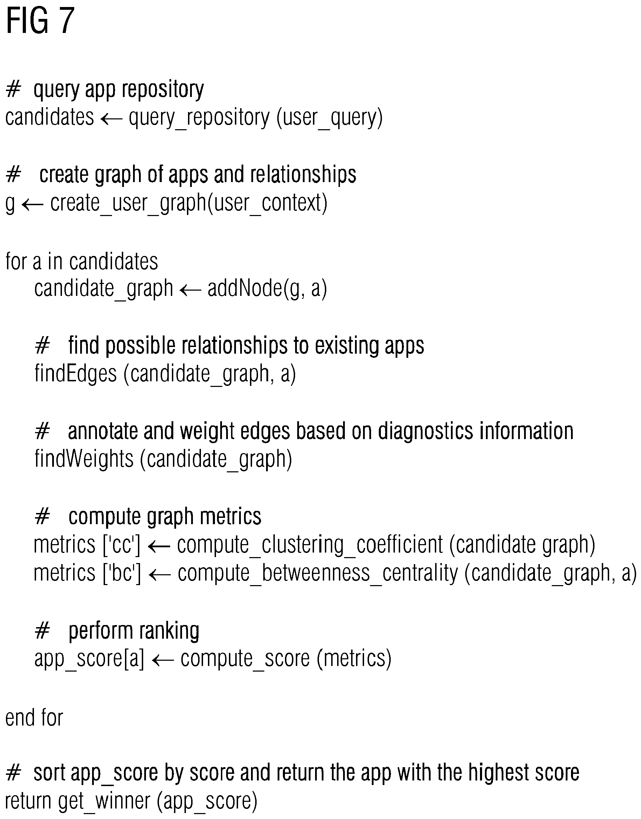

**Fig. 7** zeigt ein Beispiel für einen Pseudocode zum Finden eines optimalen Programmcodes, welcher ein Ende-zu-Ende Szenario für die Suche nach dem optimalen Programmcode und einer Empfehlung dafür darstellt.

**Bezugszeichenliste:**

| | |
|---|---|
| 1 | optimaler Programmcode |
| 2 | elektronisches Gerät |
| 3 | Steuervorrichtung |
| 4 | Datenbank, App-Store |
| 5 | System |
| 6 | Suchvorrichtung |
| 7 | Steuerdaten |
| 8 | Benutzer |
| 9 | Anwendungssystem |
| 10 | Programmumgebung |
| 11-13 | Programmcodes der Programmumgebung |
| 21-22 | Schnittstelle zwischen Programmcodes |
| 30-39 | Kandidaten-Anwendungs-Programmcode |
| 41-43 | Schnittstelle zwischen Programmcodes |
| 50 | gewichteter Graph |
| 100 | Menge von Programmcodes |
| 200 | Marktplatz für Anwendungssoftware |
| 300 | Datenquellen |
| 310 | Anwendungs-Entwickler |
| 320 | BLOGs |
| 330 | Anwendungs-Kritiken/Reviews |
| 340 | Soziale Netzwerke |
| 400 | Endgeräte von Benutzern |

401     Proxy-Server (optional)
410     PC
420     Laptop/Tablet
430     Smartphone

**Patentansprüche**

1. Verfahren zur Ansteuerung eines elektronischen Geräts (2) mit einem optimalen Programmcode (1), welcher durch zumindest einen Funktionsparameter beschreibbar ist und über zumindest eine Schnittstelle (41-43) mit einer Programmumgebung (10) interagiert,
   wobei zumindest zwei Kandidaten-Programmcodes (30-39) ermittelt werden, indem mittels dem zumindest einen Funktionsparameter in einer Menge von Programmcodes (100) gesucht wird, und für jeden der zumindest zwei Kandidaten-Programmcodes (30-39) zumindest ein Kompatibilitätsindikator bezüglich der zumindest einen Schnittstelle (41-43) bestimmt wird, und der optimale Programmcode (1) aus den zumindest zwei Kandidaten-Programmcodes (30-39) bestimmt wird, bei welchem der zumindest eine Kompatibilitätsindikator den optimaleren Wert aufweist.

2. Verfahren nach dem vorhergehenden Anspruch, wobei der jeweilige Kompatibilitätsindikator aus einem gewichteten Graphen (50) mit zumindest zwei Knoten, welche die Programmumgebung (10) und den jeweiligen Kandidaten-Programmcode (30-39) repräsentieren, und zumindest einer Kante, welche die jeweilige zumindest eine Schnittstelle (41-43) repräsentiert, und das Gewicht eine statische Abhängigkeit, eine dynamische Abhängigkeit, eine Protokoll-Interoperabilität oder eine konzeptuelle Interoperabilität oder eine Kombination daraus repräsentiert, ermittelt wird.

3. Verfahren nach dem vorhergehenden Anspruch, wobei der jeweilige Kompatibilitätsindikator mittels Daten bestimmt wird, welche auf dem Prinzip des maschinellen Lernens ermittelt wurden.

4. Verfahren nach einem der vorhergehenden Ansprüche, wobei der optimale Programmcode (1) über zumindest zwei Schnittstellen (41-43) mit der Programmumgebung (10) interagiert und der zumindest eine Kompatibilitätsindikator für jede der zumindest zwei Schnittstellen (41-43) bestimmt wird.

5. Verfahren nach einem der vorhergehenden Ansprüche, wobei der optimale Programmcode (1) über zumindest zwei Schnittstellen (41-43) mit der Programmumgebung (10) interagiert und für die Gesamtheit der zumindest zwei Schnittstellen (41-43) ein Gesamt-Kompatibilitätsindikator bestimmt wird, welcher bei der Bestimmung des optimalen Programmcodes (1) berücksichtigt wird.

6. System (5) zum Bereitstellen des optimalen Programmcodes für die Ansteuerung eines elektronischen Geräts (2), wobei das System (5) eine Steuervorrichtung (3), eine Datenbank (4) mit einer Menge von Programmcodes (100) und eine Suchvorrichtung (6), umfasst,
   und das System (5) dazu eingerichtet ist, das Verfahren nach einem der vorhergehenden Ansprüche durchzuführen, wobei der optimale Programmcode (1) aus Menge von Programmcodes (100) von der Suchvorrichtung (6) ermittelt und an die Steuervorrichtung (3) übertragen wird, und das elektronische Gerät (2) durch die Steuervorrichtung (3) angesteuert wird.

7. Computerprogramm, welches direkt in einen Speicher der Suchvorrichtung (6) des Systems (5) nach Anspruch 6 ladbar ist, mit Programmcodemitteln, um die Schritte des Verfahrens nach einem der Ansprüche 1 bis 5 auszuführen, wenn das Computerprogramm in der Suchvorrichtung (6) ausgeführt wird.

8. Speichermedium mit darauf gespeicherten elektronisch lesbaren Steuerinformationen, welche zumindest ein Computerprogramm nach dem vorhergehenden Anspruch umfassen und derart ausgestaltet sind, dass sie bei Verwendung des Speichermediums in der Suchvorrichtung (6) des Systems (5) nach Anspruch 6 das Verfahren nach einem der Ansprüche 1 bis 5 durchführen.

FIG 1

FIG 2

FIG 3

FIG 4

FIG 5

# FIG 6

```
#  compute clustering coefficient
total = 0.0
for v in nodes (G)
   #  cumulate local clustering coefficient of v
   possible = degree (G, v) * (degree (G, v) - 1)
   actual = 0
   for u in adjacentTo (G, v)
      for w in adjacentTo (G, v)
         if hasEdge (G, u, w)
            actual++
      if possible > 0
         total += 1.0 * actual / possible
return total / count (nodes (G))
```

# FIG 7

```
#  query app repository
candidates ← query_repository (user_query)

#  create graph of apps and relationships
g ← create_user_graph(user_context)

for a in candidates
    candidate_graph ← addNode(g, a)

        #  find possible relationships to existing apps
        findEdges (candidate_graph, a)

        #  annotate and weight edges based on diagnostics information
        findWeights (candidate_graph)

        #  compute graph metrics
        metrics ['cc'] ← compute_clustering_coefficient (candidate graph)
        metrics ['bc'] ← compute_betweenness_centrality (candidate_graph, a)

        #  perform ranking
        app_score[a] ← compute_score (metrics)

end for

#  sort app_score by score and return the app with the highest score
return get_winner (app_score)
```

**Europäisches Patentamt**
**European Patent Office**
**Office européen des brevets**

**EUROPÄISCHER RECHERCHENBERICHT**

Nummer der Anmeldung

EP 19 18 6748

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/068551 A1 (BALASUBRAMANIAN SWAMINATHAN [US] ET AL) 6. März 2014 (2014-03-06) * Absatz [0041] * * Absatz [0053] - Absatz [0055] * * Absatz [0059] - Absatz [0067] * * Absatz [0092] - Absatz [0093] * * Abbildungen 3, 7, 8, 9, 11 * ----- | 1-8 | INV. G06F8/36 ADD. G06F8/33 |
| X | DAMIANI E ET AL: "CORRIGENDA A HIERARCHY-AWARE APPROACH TO FACETED CLASSIFICATION OF OBJECT-ORIENTED COMPONENTS", ACM TRANSACTIONS ON SOFTWARE ENGINEERING AND METHODOLOGY, ASSOCIATION FOR COMPUTING MACHINERY, NEW YORK, US, Bd. 8, Nr. 4, 1. Oktober 1999 (1999-10-01) , Seiten 425-472, XP000964397, ISSN: 1049-331X, DOI: 10.1145/322993.322997 * Zusammenfassung * * Seite 442 - Seite 446; Abschnitt 3 "Compatibility" * * Seite 433, Zeile 20 - Zeile 31 * * Seite 438 - Seite 442; Abschnitt 2.4 "Fuzzy Weights" * * Seite 446 - Seite 450 * * Seite 453 - Seite 454; Abschnitt 5.1 "User-Defined Query Semantics and Query Language" * * Abbildung 10 * ----- | 1-8 | |
| A | US 2019/042231 A1 (KOLHE ASHISH [IN] ET AL) 7. Februar 2019 (2019-02-07) * Absatz [0002] * * Absatz [0028] - Absatz [0057] * * Abbildungen 2, 3A-3C, 4, 5 * ----- | 1-8 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 30. Januar 2020 | Eigner, Robert |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 6748

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2020

| Im Recherchenbericht angeführtes Patentdokument | Datum der Veröffentlichung | Mitglied(er) der Patentfamilie | Datum der Veröffentlichung |
|---|---|---|---|
| US 2014068551 A1 | 06-03-2014 | KEINE | |
| US 2019042231 A1 | 07-02-2019 | EP 3438813 A1<br>US 2019042231 A1 | 06-02-2019<br>07-02-2019 |

EPO FORM P0461

Für nähere Einzelheiten zu diesem Anhang : siehe Amtsblatt des Europäischen Patentamts, Nr.12/82